Europäisches Patentamt

(19) European Patent Office

Office européen des brevets

(11) Publication number: **0 334 634 B1**

(12) # EUROPEAN PATENT SPECIFICATION

(45) Date of publication of patent specification:
02.10.91 Bulletin 91/40

(51) Int. Cl.⁵: **F04B 27/08, F16C 17/08, F16B 21/20**

(21) Application number: 89302844.9

(22) Date of filing: 22.03.89

(54) Slant plate type compressor.

(30) Priority: 23.03.88 JP 37069/88

(43) Date of publication of application:
27.09.89 Bulletin 89/39

(45) Publication of the grant of the patent:
02.10.91 Bulletin 91/40

(84) Designated Contracting States:
DE FR GB IT SE

(56) References cited:
EP-A- 0 190 013
DE-A- 3 725 411

(56) References cited:
FR-A- 1 588 166
GB-A- 1 156 537
GB-A- 1 169 791
GB-A- 2 153 922

(73) Proprietor: SANDEN CORPORATION
20 Kotobuki-cho
Isesaki-shi Gunma, 372 (JP)

(72) Inventor: Shimizu, Shigemi
425 Higashi-Arai Sakai-machi
Sawa-gun Gunma 370-01 (JP)

(74) Representative: Jackson, Peter Arthur et al
Gill Jennings & Every, 53-64 Chancery Lane
London WC2A 1HN (GB)

## Description

The present invention generally relates to a refrigerant compressor of the slant plate type, such as a wobble plate compressor, suitable for use in an automotive air conditioning system.

A wobble plate type compressor for use in an automotive air conditioning system is disclosed in US-A-4586874. With reference to Figure 1 of the accompanying drawings, the disclosed wobble plate compressor 10 comprises a closed cylindrical housing assembly 11 formed by a cylinder block 111, a hollow portion such as a crank chamber 12, a front end plate 13 and a rear end plate 14. An inner end portion of the drive shaft 15 extends into a central bore 112 formed in the centre of the cylinder block 111 and is rotatably supported therein by a bearing, such as radial needle bearing 16. Axial location of the drive shaft 15 can be adjusted by an adjusting screw 17 screwed into a screw threaded portion of the central bore 112 and a spring member 18 is disposed between the axial end surface of the drive shaft 15 and the adjusting screw 17. A thrust needle bearing 19 is placed between the drive shaft 15 and the spring member 18 to ensure smooth rotation of the drive shaft 15 and to prevent the transfer of rotational force from the drive shaft 15 to the adjusting screw 17 through the spring member 18. As a result, when the drive shaft 15 rotates in the sense for tightening or loosening the adjusting screw 17 it is still kept its a fixed position. However, the provision of the bearing 19 is costly and leads to higher manufacturing cost and more complicated assembly.

In accordance with the present invention, a slant plate type compressor for use in a refrigeration circuit, the compressor including a compressor housing having a cylinder block provided with a centrally formed bore and a plurality of cylinders ; a front end plate disposed on one end of the housing and closing a crank chamber within the housing ; a rear end plate disposed on the opposite end of the cylinder block from the front end plate and defining a suction chamber and a discharge chamber therein ; a piston slidably fitted within each of the cylinders ; a drive mechanism coupled to the pistons to reciprocate the pistons within the cylinders, the drive mechanism including a drive shaft rotatably supported in the housing, with its end rotatably supported in the bore, a rotor coupled to the drive shaft and rotatable therewith, and coupling means including a plate having a surface disposed at a slant angle relative to the drive shaft, for drivingly coupling the rotor to the pistons, such that rotary motion of the rotor is converted into reciprocating motion of the pistons ; a screw member into the bore to adjust the axial location of the drive shaft ; and a spacer disposed between the inner axial end surface of the drive shaft and the screw member ; is characterised in that the shape of the spacer and the cross section of the adjacent part of the bore cooperate to restrain the spacer against rotation, whilst allowing some axial movement of the spacer along the bore upon adjustment of the screw member.

In the accompanying drawings :
Figure 1 is a vertical sectional view of a refrigerant compressor in accordance with the prior art ;
Figure 2 is a vertical sectional view of a wobble plate compressor in accordance with this invention ;
Figure 3 is an perspective view of a spacer shown in Figure 2 ;
Figure 4 is an elevation as seen from line A-A of Figure 2 ; and,
Figure 5 is an exploded perspective view of a bore portion shown in Figure 4.

Although the present invention is described below in terms of a wobble plate compressor, it is not limited in this respect. The present invention is broadly applicable to slant plate type compressors.

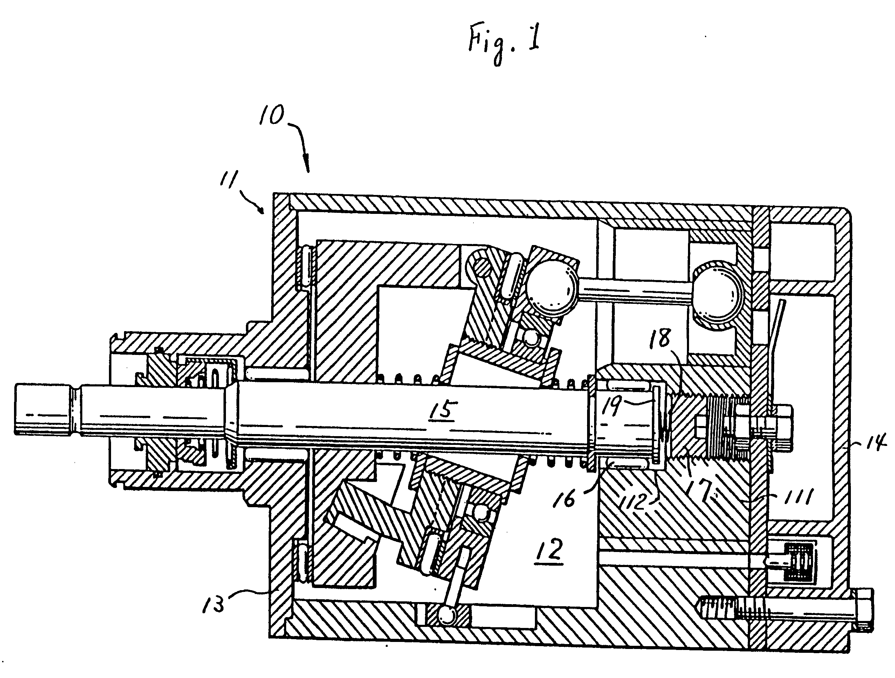

Figure 2 illustrates a wobble plate refrigerant compressor 100 in accordance with the present invention and in which the same numerals as used in Figure 1 denote corresponding elements shown in Figure 1. The compressor 100 includes a cylindrical housing assembly 11 including a cylindrical block 111, a front end plate 13 disposed at one end of the cylinder block 111, a crank chamber 12 formed between the cylinder block 111 and the front end plate 13, and a rear end plate 14 attached to the other end of the cylinder block 111. The front end plate 13 is secured to one end of the cylinder block 111 by a plurality of bolts (not shown). The rear end plate 14 is secured to the opposite end of the cylinder block 111 by a plurality of bolts (not shown). A valve plate 21 is disposed between the rear end plate 14 and the cylinder block 111. An opening 131 is formed centrally in the front end plate 13 for supporting a drive shaft 15 through a bearing 132 disposed therein. An inner end portion of the drive shaft 15 is rotatably supported by a bearing 16 disposed within a central bore 112 of the cylinder block 111. The bore 112 extends to a rearward (to the right in Figure 1) end surface of the cylinder block 111.

A cam rotor 30 is fixed on the drive shaft 15 by a pin member 151 and rotates therewith. A thrust needle bearing 22 is disposed between the inner end surface of the front end plate 13 and the adjacent end surface of the cam rotor 30. The cam rotor 30 includes an arm 31 having a slot 32. A slant plate 40 is disposed adjacent to the cam rotor 30 and includes an opening 43 through which the drive shaft 15 passes. The slant plate 40 includes an arm 41 having a pin member 42 extending thereon. The cam rotor 30 and slant plate 40 are coupled by the pin member 42 which is received in the slot 32 to form a hinged joint. The pin member 42 slides within the slot 32 to allow adjustment of the angular position of the slant plate 40 with respect to the longitudinal axis of the drive shaft 15.

A wobble plate 50 is rotatably mounted on the slant plate 40 through a bearing 51. A fork shaped slider 52 is attached to the outer periphral end of the wobble plate 50 and is slidably mounted on a sliding rail 53 disposed between the front end plate 13 and the cylinder block 111. The fork shaped slider 52 thus prevents rotation of the wobble plate 50. The wobble plate 50 nutates along the rail 53 when the cam rotor 30 rotates. The cylinder block 111 includes a plurality of periphrally located cylinder chambers 60 in which pistons 61 reciprocate. Each piston 61 is coupled to the wobble plate 50 by a respective connecting rod 62.

The rear end plate 14 includes a peripherally positioned discharge chamber 142. The valve plate 21 is located between the cylinder block 111 and the rear end plate 14 and includes a plurality of valved suction ports 141a linking the suction chamber 141 with respective cylinders 60. The valve plate 21 also includes a plurality of valved discharge ports 142a linking the discharge chamber 142 with respective cylinders 60. The suction ports 141a and discharge ports 142a are provided with suitable reed valves as described in US-A-4011029.

The suction chamber 141 includes an inlet portion 141b which is connected to an evaporator of an external cooling circuit (not shown). The discharge chamber 142 is provided with an outlet portion 142b connected to a condenser of the cooling circuit (not shown).

A passage 152 is bored in the drive shaft 15. One end opening of the passage 152 opens to the crank chamber 12 and another end opening of the passage 152 opens at an inner axial end surface of the drive shaft 15.

A valve element 71 including a valve member 71b and a bellows 71a is disposed within a hollow portion 70 formed in the cylinder block 111. A hole 211 linking the suction chamber 141 to the hollow portion is formed in the valve plate 21. A conduit 72 linking the hollow portion 70 to a rear (right side in Figure 2) most internal space 112a of the bore 112 is radially bored in the cylinder block 111.

One end surface of the bellows 71a is attached to one inner end surface of the hollow portion 70. The valve element 71b is fixed on the other end surface of bellows 71a and operates to open and close the hole 211 in accordance with the motion of bellows 71a.

The axial location of the drive shaft 15 can be adjusted by adjusting a screw 17 which is screwed into the threaded portion of the central bore and a circular disk shaped spacer 81 is disposed between the inner axial end surface of the drive shaft 15 and the adjusting screw 17.

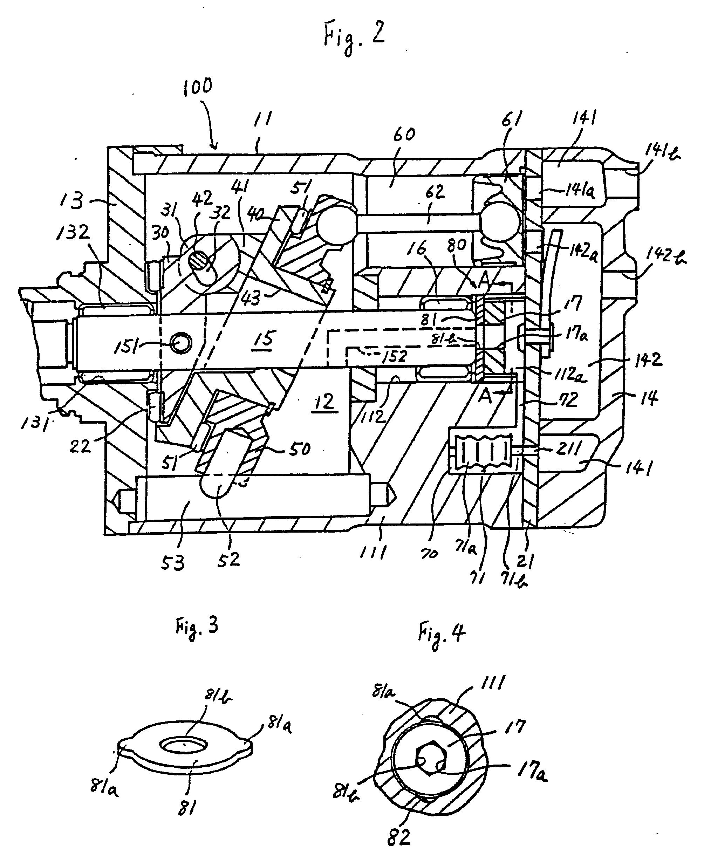

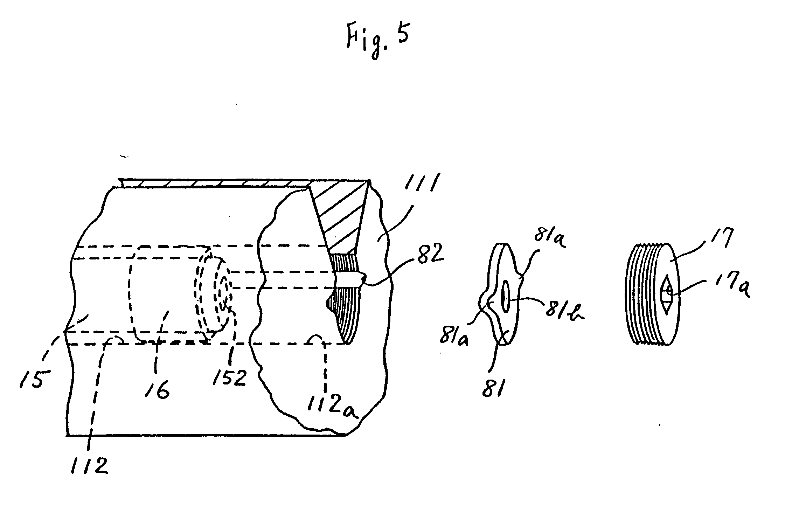

Figures 3-5 show a rotation preventing device 80 for preventing a rotation of the adjusting screw 17 during operation of the compressor 100. The rotation preventing device 80 includes a pair of substantially semicircular-shaped portions 81a radially projecting from a circumferential edge of the spacer 81 and a pair of semicylindrical-shaped axial grooves 82 formed in an inner periphral wall surface of the bore 112 to receive the portions 81a. The spacer 81 with a central hole 81b is obtained by cutting out from a sheet iron (not shown) by press work. The adjusting screw 17 comprises a central hexagonal hole 17a for receiving an appropriate hexagonal spanner. With the semicircular shaped portions 81a engaging in the semicylindrical-shaped grooves 82, the adjusting screw 17 can be tightened or loosened by using a hexagonal spanner to adjust the axial location of the drive shaft 15.

The passage 152 leads to the rear most internal space 112a of the bore 112 via the holes 81b and 17a. As a result, the crank chamber 12 is linked to the suction chamber 141 via the passage 152, hole 81b, hole 17a, space 112a, conduit 72, hollow portion 70 and hole 211.

During operation of the compressor 100, the drive shaft 15 is rotated by the engine of the vehicle (not shown) through an electromagnetic clutch (not shown). The cam rotor 30 is rotated with the drive shaft 15 causing the slant plate 40 to rotate. The rotation of the slant plate 40 causes the wobble plate 50 to nutate. The nutating motion of the wobble plate 50 reciprocates the pistons 61 in their respective cylinders 60. As the pistons 61 are reciprocated, refrigerant gas, which is introduced into the suction chamber 141 through the inlet portion 141b, is drawn into the cylinders 60 through the suction ports 141a and subsequently compressed. The compressed refrigerant gas is discharged from the cylinders 60 to the discharge chamber 142 through respective discharge ports 142a and then into the cooling circuit through the outlet portion 142b. The valve member 71 is responsive to the crank chamber pressure led through the passage 152, hole 81b, hole 17a, space 112a and conduit 72. When the pressure in crank chamber 12 exceeds a predetermined value, the hole 211 is opened by the bellows 71a. The opening of the hole 211 permits communication between the crank chamber 12 and the suction chamber 141. As a result, the slant angle of the slant plate 40 is maximised to maximise the displacement of the compressor. However, when the pressure in the crank chamber 12 is less than the predetermined value, the hole 211 is closed by the valve member 71b attached to the bellows 71a. This action blocks communication between the crank chamber 12 and the suction chamber 141. As a result, the slant angle of the slant plate 40 is controlled by changes in the pressure in the crank chamber 12 to vary the displacement of the compressor.

Furthermore, transfer of rotational force from the drive shaft 15 to the adjusting screw 17 is prevented by the rotation-preventing spacer 81 which is disposed between the inner axial end surface of the drive shaft 15 and the adjusting screw 17. As a result, the drive shaft 15 can be kept its adjusted axial location during the operation of the compressor.

## Claims

1. A slant plate type compressor (100) for use in a refrigeration circuit, the compressor including a compressor housing (11) having a cylinder block (111) provided with a centrally formed bore (112) and a plurality of cylinders (60) ; a front end plate (13) disposed on one end of the housing and closing a crank chamber (12) within the housing ; a rear end plate disposed on the opposite end of the cylinder block from the front end plate and defining a suction chamber (141) and a discharge chamber (142) therein ; a piston (61) slidably fitted within each of the cylinders ; a drive mechanism coupled to the pistons to reciprocate the pistons within the cylinders, the drive mechanism including a drive shaft (15) rotatably supported in the housing, with its end rotatably supported in the bore (112), a rotor (30) coupled to the drive shaft and rotatable therewith, and coupling means (40, 50, 62) including a plate (50) having a surface disposed at a slant angle relative to the drive shaft, for drivingly coupling the rotor to the pistons, such that rotary motion of the rotor is converted into reciprocating motion of the pistons ; a screw member (17) into the bore to adjust the axial location of the drive shaft ; and a spacer (81) disposed between the inner axial end surface of the drive shaft and the screw member ; characterised in that the shape of the spacer (81) and the cross section of the adjacent part of the bore (112) cooperate to restrain the spacer against rotation whilst allowing some axial movement of the spacer along the bore upon adjustment of the screw member (17).

2. A compressor according to claim 1, wherein the spacer (81) has at least one outward radial projection (81a) formed at a peripheral edge thereof and a complementary groove (82) is formed in the inner wall surface of the bore.

3. A compressor according to claim 2, wherein the spacer (81) is a circular disk having at least one substantially semicircular radial projection (81a).

4. A compressor according to claim 2 or claim 3, wherein the groove (82) is semicylindrical.

5. A compressor according to any one of claims 2 to 4, wherein there are a diametrically opposed pair of the projections (81a).

6. A variable capacity compressor according to any of the preceding claims, in which the crank chamber (12) can be interconnected with the suction chamber (141) via a passage (152) in the drive shaft (15) and via holes (17a, 81b) through the screw member (17) and spacer (81).

## Patentansprüche

1. Schiefscheibenartiger Kompressor (100) zur Benutzung in einem Kühlkreislauf mit einem Kompressorgehäuse (11) mit einem eine zentral gebildete Bohrung (112) und eine Mehrzahl von Zylindern (60) aufweisenden Zylinderblock (111), einer an einem Ende des Gehäuses vorgesehenen und eine Kurbelkammer (12) in dem Gehäuse abdichtenden vorderen Endplatte (13), einer an dem zu der vorderen Endplatte entgegengesetzten Ende des Zylinderblockes vorgesehenen und eine Ansaugkammer (141) und eine Auslaßkammer (142) darin abgrenzenden hinteren Endplatte ; einem verschiebbar in jedem der Zylinder eingepaßten Kolben (61) ; einem mit den Kolben verbundenen Antriebsmechanismus zum Hin- und Herbewegen der Kolben in den Zylindern, wobei der Antriebsmechanismus eine drehbar in dem Gehäuse gelagerte Antriebswelle (15), deren Ende drehbar in der Bohrung (112) gelagert ist, einen mit der Antriebswelle verbundenen und damit drehbaren Rotor (30) und eine Verbindungsvorrichtung (40, 50, 62) mit einer Scheibe (50), deren Oberfläche mit einem Neigungswinkel relativ zu der Antriebswelle vorgesehen ist, zum antriebsgemäßen Verbinden des Rotors mit den Kolben derart, daß eine Drehbewegung des Rotors in eine Hin- und Herbewegung der Kolben gewandelt wird, aufweist ; einem Schraubenteil (17) in die Bohrung zum Einstellen der axialen Stellung der Antriebswelle und einem zwischen der inneren axialen Endoberfläche der Antriebswelle und dem Schraubenteil vorgesehenen Abstandsstück (81) ; dadurch gekennzeichnet, daß die Form des Abstandsstückes (81) und der Querschnitt des benachbarten Teiles der Bohrung (112) zum Hindern des Abstandsstückes an der Drehung zusammenwirken, während eine kleine axiale Bewegung des Abstandsstückes entlang der Bohrung auf das Einstellen hin des Schraubenteiles (17) ermöglich ist.

2. Kompressor nach Anspruch 1, bei dem das Abstandsstück (81) mindestens einen an einer Umfangskante davon gebildeten, radial nach außen weisenden Vorsprung (81a) aufweist, und eine entgegengesetzte Rille (82) in der inneren Wandoberfläche der Bohrung gebildet ist.

3. Kompressor nach Anspruch 2, bei dem das Abstandsstück (81) eine kreisförmige Scheibe mit mindestens einem im wesentlichen halbkreisförmigen radialen Vorsprung (81a) ist.

4. Kompressor nach Anspruch 2 oder 3, bei dem die Rille (82) halbzylindrisch ist.

5. Kompressor nach einem der Ansprüche 2 bis 4, bei dem ein Paar von diametral entgegengesetzten Vorsprüngen (81a) vorgesehen ist.

6. Kompressor mit variabler Kapazität nach einem der vorhergehenden Ansprüche, bei dem die Kurbelkammer (12) mit der Ansaugkammer (141) durch einen Durchgang (152) in der Antriebswelle (15) und über Löcher (17a, 81b) durch das Schraubenteil (17) und das Abstandsstück (81) verbunden werden kann.

## Revendications

1. Compresseur de type à plateau en biais (100) destiné à être utilisé dans un circuit de réfrigération, ce compresseur comprenant un carter de compresseur (11) comportant un bloc de cylindres (111) muni d'un alésage central (112) et d'un certain nombre de cylindres (60), une plaque d'extrémité avant (13) disposée sur une extrémité du carter et fermant une chambre de manivelle (12) à l'intérieur de ce carter, une plaque d'extrémité arrière disposée sur l'extrémité opposée du bloc de cylindres par rapport à la plaque d'extrémité avant et définissant une chambre d'aspiration (141) et une chambre de décharge (142) dans celui-ci ; un piston (61) monté en glissement à l'intérieur de chacun des cylindres ; un mécanisme d'entraînement couplé aux pistons pour faire aller et venir ces pistons à l'intérieur des cylindres, ce mécanisme d'entraînement comprenant un arbre d'entraînement (15) monté en rotation dans le carter de façon que ses extrémités soient supportées en rotation dans l'alésage (112), un rotor (30) couplé à l'arbre d'entraînement et pouvant tourner avec celui-ci, et des moyens d'accouplement (40, 50, 62) comprenant une plaque (50) présentant une surface formant un angle d'inclinaison par rapport à l'arbre d'entraînement pour assurer l'accouplement d'entraînement entre le rotor et les pistons de façon que le mouvement de rotation du rotor soit transformé en un mouvement de va-et-vient des pistons ; un élément de vis (17) monté dans l'alésage pour régler la position axiale de l'arbre d'entraînement ; et une pièce d'écartement (81) placée entre la surface d'extrémité axiale intérieure de l'arbre d'entraînement et l'élément de vis ; compresseur caractérisé en ce que la forme de la pièce d'écartement (81) et la section transversale de la partie adjacente de l'alésage (112) coopèrent pour empêcher la pièce d'écartement de tourner tout en permettant un certain mouvement axial de cette pièce d'écartement le long de l'alésage lorsqu'on règle l'élément de vis (17).

2. Compresseur selon la revendication 1, caractérisé en ce que la pièce d'écartement (81) comporte au moins une projection radiale vers l'extérieur (81a) formée sur un bord périphérique de celle-ci, et en ce qu'une rainure complémentaire (82) est formée dans la surface de paroi intérieure de l'alésage.

3. Compresseur selon la revendication 2, caractérisé en ce que la pièce d'écartement (81) est un disque circulaire comportant au moins une projection radiale essentiellement semi-circulaire (81a).

4. compresseur selon l'une quelconque des revendications 2 et 3, caractérisé en ce que la rainure (82) est semi-cylindrique.

5. Compresseur selon l'une quelconque des revendications 2 à 4, caractérisé en ce qu'il comporte une paire des projections (81a) diamétralement opposées.

6. Compresseur à capacité variable selon l'une quelconque des revendications précédentes, caractérisé en ce que la chambre de manivelle (12) peut être reliée à la chambre d'aspiration (141) par un passage (152) percé dans l'arbre d'entraînement (15) et par des trous (17a, 81b) percés dans l'élément de vis (17) et dans la pièce d'écartement (81).

Fig. 1

EP 0 334 634 B1

## Fig. 2

## Fig. 3

## Fig. 4

Fig. 5